# EUROPÄISCHE PATENTSCHRIFT

(11) **EP 1 957 554 B1**
(45) Veröffentlichungstag und Bekanntmachung des Hinweises auf die Patenterteilung: **17.02.2010**
(21) Anmeldenummer: 06777583.3
(22) Anmeldetag: 05.07.2006
(51) Int. Cl.: C08G 18/12, C08G 18/28, C08G 18/80, C09J 175/00, C08G 59/40

(54) **TIEFTEMPERATUR-SCHLAGZÄHE HITZE-HÄRTBARE EPOXIDHARZZUSAMMENSETZUNG MIT EPOXIDFESTHARZEN**
LOW-TEMPERATURE IMPACT RESISTANT THERMOSETTING EPOXIDE RESIN COMPOSITIONS WITH SOLID EPOXIDE RESINS
COMPOSITION DE RESINE EPOXY DURCISSANT A LA CHALEUR ET RESILIANTE A BASSE TEMPERATURE, CONTENANT DES RESINES SOLIDES EPOXY

(30) Priorität: 05.07.2005 EP 05106097
(43) Veröffentlichungstag der Anmeldung: 20.08.2008
(73) Patentinhaber: Sika Technology AG, 6340 Baar (CH)
(72) Erfinder: KRAMER, Andreas, CH-8006 Zürich (CH); SCHULENBURG, Jan, Olaf, CH-8037 Zürich (CH); RHEINEGGER, Urs, CH-8049 Zürich (CH); FINTER, Jürgen, CH-8037 Zürich (CH)
(74) Vertreter: Sika Patent Attorneys
(86) Internationale Anmeldenummer: PCT/EP2006/063891
(87) Internationale Veröffentlichungsnummer: WO 2007/003650

(56) Entgegenhaltungen:
- EP-A- 0 343 676
- EP-A- 1 431 325
- EP-A- 1 498 441

## Beschreibung

### Technisches Gebiet

Die Erfindung betrifft hitzehärtende Zusammensetzungen, welche bei tiefen Temperaturen gleichzeitig eine hohe Schlagzähigkeit und gute mechanische Eigenschaften aufweisen.

### Stand der Technik

In der Fertigung sowohl von Fahrzeugen und Anbauteilen oder auch Maschinen und Geräten werden anstelle oder in Kombination mit herkömmlichen Fügeverfahren wie Schrauben, Nieten, Stanzen oder Schweißen immer häufiger hochwertige Klebstoffe eingesetzt. Werden strukturelle Teile verklebt, sind eine hohe Festigkeit und Schlagzähigkeit des Klebstoffes von grösster Wichtigkeit.

Herkömmliche Epoxyklebstoffe zeichnen sich zwar durch eine hohe mechanische Festigkeit, insbesondere eine hohe Zugfestigkeit aus. Bei schlagartiger Beanspruchung der Verklebung sind klassische Epoxyklebstoffe jedoch meist zu spröde und können deshalb unter Crashbedingungen, bei denen sowohl grosse Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber auch bei tiefen Temperaturen unter -10°C.

Deshalb wurde mittels verschiedener Methoden angestrebt, die Schlagzähigkeit von hitzehärtenden Epoxyklebstoffen zu verbessern.

EP-A-1 359 202 beschreibt eine Verbesserung der Schlagzähigkeit durch die Verwendung eines Harnstoffderivates in einem nicht-diffundierenden Trägermaterial sowie schlagzähe Zusammensetzungen, welche dieses Harnstoffderivat sowie Epoxid-Addukte enthalten. EP-A-1 431 325 beschreibt die Verwendung eines Epoxidgruppen-terminierten Schiagzähigkeitsmodifikator-Polymers sowie schlagzähe Zusammensetzungen, welche dieses Schlagzähigkeitsmodifikator-Polymer sowie Epoxid-Addukte enthalten. EP-A-1 498 441 beschreibt ebenfalls ein weiteres Epoxidgruppen-terminiertes Schlagzähigkeitsmodifikator-Polymer sowie schlagzähe Zusammensetzungen, welche dieses Schlagzähigkeitsmodifikator-Polymer sowie Epoxid-Addukte enthalten. Durch die Verwendung der Epoxidgruppen-terminierten Schlagzähigkeitsmodifikator-Polymere konnte zwar die Schlagzähigkeit bei tiefen Temperaturen markant erhöht werden, aber alle in diesen Dokumenten offenbarten schlagzähen Zusammensetzungen enthielten ein Epoxid-Addukt. Derartige Epoxid-Addukte müssen separat hergestellt werden und weisen tendenziell eine höhere Viskosität auf.

### Darstellung der Erfindung

Aufgabe der vorliegenden Erfindung ist es daher, hitze-härtbare schlagzähe Epoxidharzzusammensetzungen zur Verfügung zu stellen, welche einerseits sowohl über eine hohe Tieftemperaturschlagzähigkeit als auch hohe mechanische Festigkeit verfügen und andererseits einfach hergestellt werden können.

Überraschenderweise hat sich erwiesen, dass diese Aufgabe durch Zusammensetzungen gemäss Anspruch 1 gelöst werden konnte.

Derartige Zusammensetzungen weisen eine hohe Schlagzähigkeit bei tiefen Temperaturen, insbesondere bei Temperaturen von unter - 20°C, auf.

Insbesondere hat sich gezeigt, dass diese Eigenschaften ohne Epoxid-Addukte erreicht werden können und sich durch ein vereinfachtes Herstellverfahren auszeichnen. Es zeigte sich nämlich überraschend, dass durch den Einsatz von Festharzen ebenfalls hohe Schlagfestigkeiten erreicht werden können.

Derartige Klebstoffe können hohe Schlagfestigkeiten, gemessen als Bruchenergie, von über 13 J bei 23 °C und von über 5 J bei -40°C, erreichen. Weiterhin können die typischen grossen Unterschiede zwischen Tief- und Normaltemperatur in der Schlagfestigkeit reduziert werden. So können mit den Zusammensetzungen Verhältnisse von Bruchenergie bei -40°C zu 23°C von über 40%, zuweilen sogar über 80%, erreicht werden.

Weiterhin wurde gefunden, dass sich diese Zusammensetzungen bestens als Klebstoffe, insbesondere als Rohbauklebstoffe, eignen, und über einen breiten Temperaturbereich zum Einsatz kommen können.

### Wege zur Ausführung der Erfindung

Die vorliegende Erfindung betrifft Zusammensetzungen, welche mindestens ein Epoxid-Festharz **A,** mindestens ein Polymer **B** der Formel (I), mindestens ein Thixotropiermittel **C,** auf Basis eines Harnstoffderivates und mindestens einen Härter **D** für Epoxidharze, welcher durch erhöhte Temperatur aktiviert wird, enthalten.

Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze **A** weisen die Formel (II) auf

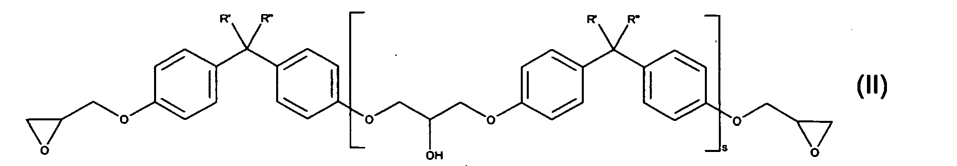

Hierbei stehen die Substituenten R' und R" unabhängig von einander entweder für H oder CH₃. Weiterhin steht der Index s für einen Wert von > 1.5, insbesondere von 2 bis 12.

Derartige Epoxid-Festharze sind kommerziell erhältlich beispielsweise von Dow oder Huntsman oder Resolution.

Bevorzugt beträgt der Gesamtanteil des Epoxid-Festharzes **A** 1 - 40 Gew.%, insbesondere 5 - 40 Gew.%, bevorzugt 5 - 30 Gew.%, meist bevorzugt 5 - 20 Gew.%, bezogen auf das Gewicht der gesamten Zusammensetzung.

Weiterhin umfasst die Zusammensetzung mindestens ein Polymer **B** der Formel (I)

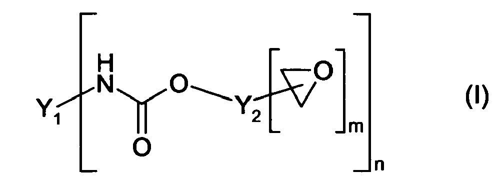

Hierbei stellt Y₁ einen n-wertigen Rest eines mit Isocyanatgruppen terminierten linearen oder verzweigten Polyurethanprepolymeren **PU1** nach dem Entfernen der endständigen Isocyanatgruppen dar. Y₂ steht für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen. Weiterhin stehen die Indizes m für die Werte 1, 2 oder 3 und n für die Werte 2 bis 8.

Das Polymer **B** der Formel (I) ist beispielsweise erhältlich durch die Reaktion einer Monohydroxyl-Epoxidverbindung der Formel (IV) und eines Isocyanatgruppen-terminierten linearen oder verzweigten Polyurethanprepolymeren **PU1** der Formel (V):

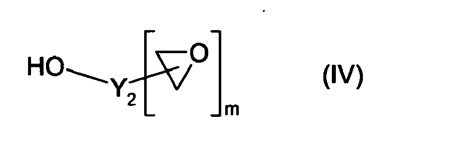

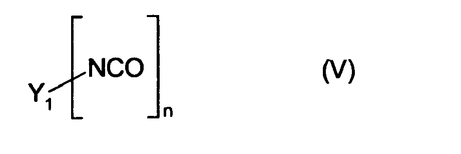

Dieses Polyurethanprepolymer **PU1** wird hergestellt aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}.**

In der gesamten hier vorliegenden Schrift werden mit der Vorsilbe "Poly" in "Polyisocyanat", "Polyol", "Polyphenol" und "Polymerkaptan" Moleküle bezeichnet, die formal zwei oder mehr der jeweiligen funktionellen Gruppen enthalten.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)- bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 600 - 6000, insbesondere von 600 - 4000, bevorzugt von 700 - 2200 g/Equivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Speziell geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Polyhydroxyterminierte Polybutadienpolyole, wie beilspielsweise solche, die durch Polymerisation von 1,3-Butadien und Allylalkohol hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyhydroxyterminierte Acrylonitril/Polybutadien-Copolymere, wie sie beispielsweise aus Carboxylterminierten Acrylonitril/Polybutadien-Copolymere (kommerziell erhältlich unter dem Namen Hycar® CTBN von Hanse Chemie AG, Deutschland) und Epoxiden oder aus Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentsgewichten von 600 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Polybutadien-co-Acrylnitrilen, hydroxylterminierten synthetischen Kautschuken, deren Hydrierurigsprodukte und Gemischen dieser genannten Polyole.

Im Weiteren können als Polymere **Q_{PM}** auch di- oder höherfunktionelle amino-terminierte Polyethylenether, Polypropylenether, Polybutylenether, Polybutadiene, Polybutadien/Acrylnitrile, wie sie zum Beispiel die unter dem Namen Hycar® CTBN von Hanse Chemie AG, Deutschland vertrieben werden, sowie weitere amino-terminierte synthetische Kautschuke oder Gemische der genannte Komponenten verwendet werden.

Für gewisse Anwendungen sind als Polymere **Q_{PM}** insbesondere Hydroxyl-Gruppen aufweisende Polybutadiene oder Polyisoprene oder deren hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (VI) oder (VII) 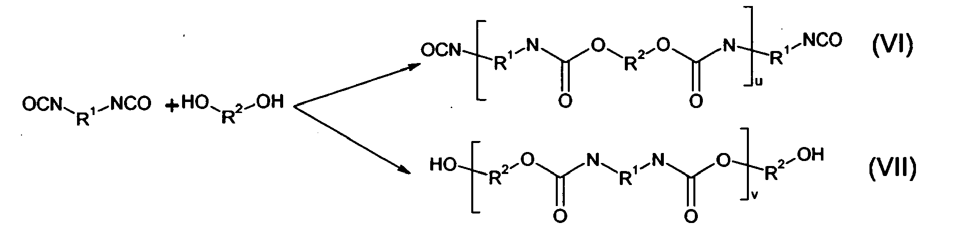 Die Reste R¹ und R² stellen einen divalenten organischen Rest dar und die Indizes v und w variieren je nach Stöchiometrieverhältnis von 1 bis typischerweise 5.

Diese Spezies der Formel (VI) oder (VII) können dann wiederum weiterreagiert werden. So kann beispielsweise aus der Spezies der Formel (VI) und einem Diol mit einem divalenten organischen Rest R³ ein kettenverlängertes Polyurethanprepolymer **PU1** der folgenden Formel gebildet werden:

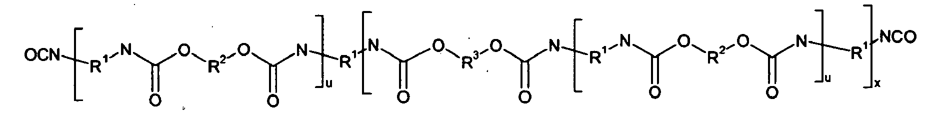

Aus der Spezies der Formel (VII) und einem Diisocyanat mit einem divalenten organischen Rest R⁴ kann ein kettenverlängertes Polyurethan-prepolymer **PU1** der folgenden Formel gebildet werden:

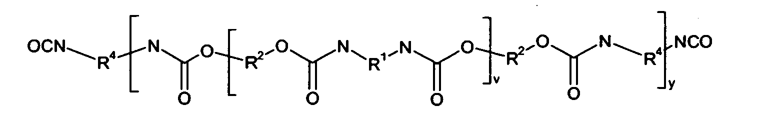

Die Indizes x und y variieren je nach Stöchiometrievefiältnis von 1 bis typischerweise 5, und sind insbesondere 1 oder 2.

Weiterhin kann auch die Spezies der Formel (VI) mit der Species der Formel (VII) umgesetzt werden, so dass ein NCO Gruppen aufweisendes kettenverlängertes Polyurethanprepolymer **PU1** entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanprepolymeren **PU1** generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polymeren den Formel **B** beziehungsweise die Applikation der Zusammensetzung erschweren.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Polybutadien-Acrylnitril-Copolymere sowie deren Gemische.

Als Polymere **Q_{PM}** sind insbesondere bevorzugt α,ω-Polyalkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenole werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanprepolymeren **PU1** nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), o,o-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

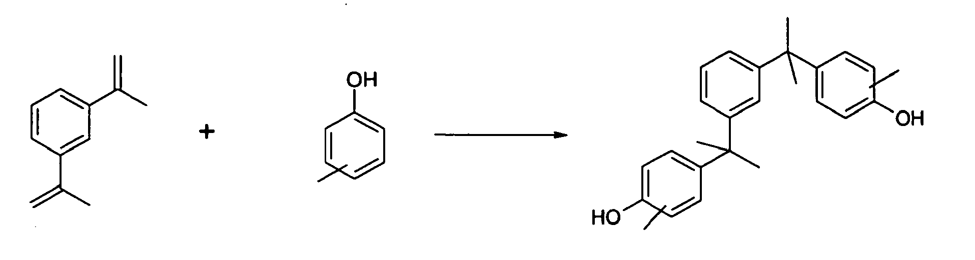

Besonders bevorzugt sind schwerflüchtige Bisphenole. Als meist bevorzugt gelten Bisphenol-M, Bisphenol-S.

Bevorzugt weist das **Q_{PP}** 2 oder 3 phenolische Gruppen auf.

In einer ersten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers **PU1** erfolgt in einer dem Polyurethan-Fachmann bekannten Art und Weise, insbesondere, indem, dass das Diisocyanat oder Triisocyanat in einem stöchiometrischen Überschuss in Bezug auf die Amino-, Thiol- oder Hydroxylgruppen des Polymeren **Q_{PM}** eingesetzt wird.

In einer zweiten Ausführungsform wird das Polyurethanprepolymer **PU1** aus mindestens einem Diisocyanat oder Triisocyanat sowie aus einem, gegebenenfalls substituierten, Polyphenol **Q_{PP}** hergestellt. Die Herstellung des Polyurethanprepolymers **PU1** erfolgt in einer dem Polyurethan-Fachmann bekannter Art und Weise, insbesondere indem, dass das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers **PU1** aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

In einem ersten Verfahren, "Eintopfverfahren" genannt, wird eine Mischung von mindestens einem Polyphenol **Q_{PP}** und mindestens einem Polymeren **Q_{PM}** mit mindestens einem Diisocyanat oder Triisocyanat in einem Isocyanatüberschuss umgesetzt.

In einem zweiten Verfahren, "2-Schrittverfahren I" genannt, wird mindestens ein Polyphenol **Q_{PP}** mit mindestens einem Diisocyanat oder Triisocyanat in einem Isocyanatüberschuss umgesetzt und anschliessend mit mindestens einem Polymeren **Q_{PM}** in Unterschuss umgesetzt.

Im dritten Verfahren schliesslich, "2-Schrittverfahren II" genannt, wird mit mindestens ein Polymer **Q_{PM}** mit mindestens einem Diisocyanat oder Triisocyanat in einem Isocyanatüberschuss umgesetzt und anschliessend mit mindestens einem Polyphenol **Q_{PP}** in Unterschuss umgesetzt.

Die drei Verfahren führen zu Isocyanat-terminierten Polyurethanprepolymeren **PU1,** die sich bei gleicher Zusammensetzung in der Sequenz ihrer Bausteine unterscheiden können. Es sind alle drei Verfahren geeignet, jedoch ist das "2-Schrittverfahren II" bevorzugt.

Werden die beschriebenen Isocyanat-endständigen Polyurethanprepolymeren **PU1** aus difunktionellen Komponenten aufgebaut, zeigte sich, dass das Equivalenz-Verhältnis Polymer **Q_{PM}**/Polyphenol **Q_{PP}** bevorzugt grösser als 1.50 und das Equivalenz-Verhältnis Polyisocyanat/(Polyphenol **Q_{PP}** + Polymer Q_{PM}) bevorzugt grösser als 1.20 ist.

Wird die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Equivalenz-Verhältnisse stark davon abhängen, ob entweder das gewählte Polymer **Q_{PM},** das Polyphenyl **Q_{PP},** das Diisocyanat oder Triisocyanat oder mehrere der genannten Komponenten eine Funktionalität >2 besitzen. Je nach dem können unterschiedliche Equivalenz-Verhältnisse eingestellt werden, deren Grenzen durch die Viskosität der resultierenden Polymere bestimmt wird und die experimentell von Fall zu Fall bestimmt werden müssen.

Das Polyurethanprepolymer **PU1** weist bevorzugt elastischen Charakter auf und zeigt eine Glasumwandlungstemperalur Tg von kleiner als 0°C.

Die Monohydroxyl-Epoxidverbindung der Formel (IV) weist 1, 2 oder 3 Epoxidgruppen auf. Die Hydroxylgruppe dieser Monohydroxyl-Epoxidverbindung (IV) kann eine primäre oder eine sekundäre Hydroxylgruppe darstellen.

Solche Monohydroxyl-Epoxidverbindungen lassen sich beisp-ielsweise durch Umsetzung von Polyolen mit Epichlorhydrin erzeugen. Je nach Reaktionsführung entstehen bei der Umsetzung von mehrfunktionellen Alkohoen mit Epichlorhydrin als Nebenprodukte auch die entsprechenden Monohydroxyl-Epoxidverbindungen in unterschisdlichen Konzentrationen. Diese lassen sich durch übliche Trennoperationen isolieren. In d er Regel genügt es aber, das bei der Glycidylisierungsreaktion von Polyolen erhaltene Produktgemisch aus vollstandig und partiell zum Glycidylether reagiertem Polyol einzusetzen, Beispiele solcher hydroxylhaltigen Epoxide sind Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ahnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (VIII), der in handelsüblichen flüssigen Epoxidharzen hergestellt aus Bisphenol-A (R = CH₃) und Epichlorhydrin zu etwa 15 % enthalten ist, sowie die entsprechenden β-Hydroxyether der Formel (VIII), die bei der Reaktion von Bisphenol-F (R = H) oder des Gemisches von Bisphenol-A und Bisphenol-F mit Epichlorhydon gebildet werden.

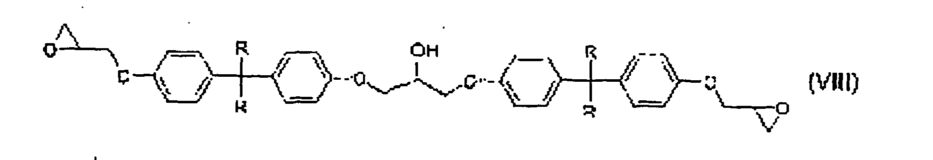

Im Weiteren können auch unterschiedlicnste Epoxide mit einer β-Hydroxyether-Gruppe, hergestellt durch die Reaktion von (Poty-)Epoxiden mit einem Unterschuss von einwertigen Nukleophilen wie Carbonsäuren, Phenolen, Thiolen oder sec.-Aminen eingesetzt werden

Die freie primäre oder sekundäre OH-Funktionalität der Monohydroxyl-Epoxidverbindung der Formel (IV) lasst eine effiziente Umsetzung mit terminalen Isocyanatgruppen von Prepolymeren zu, ohne dafür unverhältnismässige Überschüsse der Epoxidkomponente einsetzen zu müssen

Zur Umsetzung der Palyurethanprepolymeren **PU1** der Formel (V) können stöchiometrische Mengen Monohydroxyl-Epoxidverbindung der Formel (IV) oder ihrer Mischungen eingesetzt werden. Von der Stöchiometrie in Bezug auf dessen Equivatente OH-Gruppen respektive Isocyanatgruppen kann abgewichen werden. Das Verhältnis [OH][NCO] beträgt 0.6 bis 3.0. vorzugsweise 0.9 bis 1.5, insbesondere 0.98 bis 1.1.

Das Polymer **B** weist vorteilhaft einen elastischen Charakter auf und ist weiterhin vorteilhaft in Epoxid-Flüssigharzen löslich oder dispergierbar.

Der Gewichtsanteil aller Polymere **B** der Formel (I) beträgt vorzugsweise zwischen 5 und 40 Gewichts-%, vorzugsweise zwischen 7 und 35 Gewichts-% bezogen auf das Gewicht der gesamten Zusammensetzung.

Das Polymer **B** kann bei Bedarf und je nach der resultierenden Viskosität mit weiteren Epoxidharzen verdünnt werden. Bevorzugt sind hierzu Diglycidylether von Bisphenol-A. Bisphenol-F sowie von Bisphanol-A/F, sowie die weiter unten beschriebenen epoxidgruppentragenden Reaktiwerdünner **F**, insbesondere Hexandioldiglycidylether, Polypropylenglykoldiglycidylether und Trimethylolpropantriglycidylether.

Weiterhin umfasst die Zusammensetzung mindestens ein Thixotropiermittel **C** auf Basis eines Harnstoffderivates. Das Hamstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylen-diisocyanat (MDI) mit Butylamin erwiesen.

Das Hamstoffderivat ist vorzugsweise in einem Trägermaterial vorhanden. Das Trägermaterial kann ein Weichmacher, insbesondere ein Phthalat oder ein Adipat sei, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.

Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer **PU2,** insbesondere erhalten durch Umsetzung eines trifunktionellen Polyetherpolyols mit IPDI und anschliessender Blockierung der endständigen Isocyanatgruppen mit Caprolactam.

Vorteilhaft beträgt der Gesamtanteil des Thixotropiermittels **C** 5 - 40 Gewichts-%, vorzugsweise 10 - 25 % Gewichts-%, bezogen auf das Gewicht der gesamten Zusammensetzung. Das Verhältnis vom Gewicht des Harnstoffderivates zu Gewicht des allenfalls vorhandenen Trägermittels beträgt vorzugsweise 2 / 98 bis 50 / 50, insbesondere 5 / 95 - 25 /75.

Die erfindungsgemässe Zusammensetzung enthält weiterhin mindestens einen Härter **D** für Epoxidharze, welcher durch erhöhte Temperatur aktiviert wird. Es handelt sich hierbei vorzugsweise um einen Härter, welcher ausgewählt ist aus der Gruppe Dicyandiamid, Guanamine, Guanidine, Aminoguanidine und deren Derivate. Weiterhin möglich sind katalytisch wirksame substituierte Harnstoffe wie 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden. Besonders bevorzugt ist Dicyandiamid.

Vorteilhaft beträgt der Gesamtanteil des Härters **D** 1 - 10 Gewichts-%, vorzugsweise 2 - 8 Gewichts-%, bezogen auf. das Gewicht der gesamten Zusammensetzung.

In einer bevorzugten Ausführungsform enthält die Zusammensetzung zusätzlich mindestens ein Epoxid-Flüssigharz **E.** Bevorzugte Epoxid-Flüssigharze **E** weisen die Formel (III) auf

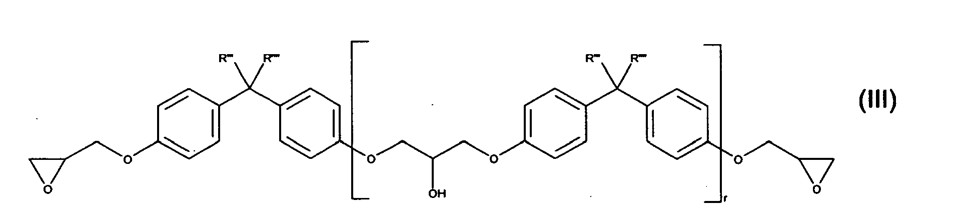

Hierbei stehen die Substituenten R'" und R"" unabhängig von einander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' vereist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R 331 (Dow) oder Epikote 828 (Resolution) erhältlich.

Die Zusammensetzung weist vorzugsweise einen Gesamtanteil des Epoxid-Flüssigharz E von 10 - 70 Gew.%, insbesondere 15 - 60 Gew.-%, bezogen auf das Gewicht der gesamten Zusammensetzung auf.

In einer weiter bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 3 - 30 Gewichts-%, vorzugsweise 5 - 25 Gewichts-%, bezogen auf das Gewicht der gesamten Zusammensetzung.

In einer weiteren bevorzugten Ausführungsform enthält die Zusammensetzung zusätzlich mindestens einen epoxidgruppentragenden Reaktivverdünner **G.** Bei diesen Reaktiwerdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolether, Allylglycidylether, Tetrahydrofurfuryl- und Furfurylglycidylether, Trimethoxysilylglycidylether,
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan
- Glycidylether von Phenol- und Anilinverbindungen wie Phenylglycidylether, Kresolglycidylether, p-tert.-Butylphenylglycidylether, Nonylphenolglycidylether, 3-n-Pentadecenyl-glycidylether (aus Cashewnuss-Schalen-Öl), N,N-Diglycidylanilin
- Epoxidierte Tertiäre Amine wie N, N-Diglycidylcyclohexylamin
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren
- Epoxidierte di- oder trifunktionelle, nieder- bis hochmolekulare Polyetherpolyole wie Polyethylenglycol-diglycidylether, Polypropyleneglycol-diglycidylether

Besonders bevorzugt sind Hexandioldiglycidylether, Polypropylenglycoldiglycidylether und Polyethylenglycoldiglycidylether.

Vorteilhaft beträgt der Gesamtanteil des epoxidgruppentragenden Reaktiwerdünners **G** 1 - 7 Gewichts-%, vorzugsweise 2 - 6 Gewichts-%, bezogen auf das Gewicht der gesamten Zusammensetzung.

Die Zusammensetzung kann weitere Bestandteile, insbesondere Katalysatoren, Hitze- und/oder Lichtstabilisatoren, Thixotropiermittel, Weichmacher, Lösungsmittel, Farbstoffe und Pigmente, umfassen.

Als besonders vorteilhaft hat sich erwiesen, dass auch mit Zusammensetzungen, welche keine Epoxid-Addukte, wie sie aus dem Stand der Technik EP-A-1 359 202, EP-A-1 431 325 oder EP-A-1 498 441 bekannt sind, enthalten, derart gute Schlagzähigkeiten erhalten werden können.

Es hat sich gezeigt, dass sich die erfindungsgemässen Zusammensetzungen besonders als einkomponentige Klebstoffe eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugswiese 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Es sind grundsätzlich auch zweikomponentige Klebstoffe denkbar.

Mit einem Klebstoff basierend auf einer erfindungsgemässen Zusammensetzung ist es möglich, die gewünschte Kombination von hoher Crashfestigkeit und hoher sowie tiefer Einsatztemperatur zu erreichen.

Ein solcher Klebstoff wird zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C,.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen in Transportmittelbau wie Schiffe, Lastwagen, Busse oder Schienenfahrtzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 100°C und -40°C, vorzugsweise zwischen 80°C und -40°C, insbesondere zwischen 50°C und -40°C zum Einsatz.

Es lassen sich Zusammensetzungen formulieren, welche typischerweise Bruchenergien, gemessen nach DIN 11343, von mehr als 10.0 J bei 23°C und mehr als 5.0 J bei -40°C aufweisen. Es lassen sich zuweilen Zusammensetzungen formulieren, welche Bruchenergien von mehr als 11.0 J bei 23°C und von mehr als 7.0 J bei -40°C. Besonders vorteilhafte Zusammensetzungen weisen gar Bruchenergien von mehr als 15.0 J bei 23°C und von mehr als 13.0 J bei -40°C auf.

Insbesondere ist es auch möglich, dass die Bruchenergien bei -40°C nicht sehr viel geringer sind als bei Raumtemperaturen. So sind Verhältnisse der Bruchenergie bei -40°C zur Bruchenergie bei 23°C von ≥ 0.40, insbesondere ≥ 0.50 möglich. Die besonders bevorzugten Zusammensetzungen erreichen derartige Verhältnisse von ≥ 0.70, beziehungsweise gar von ≥ 0.80.

In einer speziellen Weise sind auch Schmelzklebstoffe auf der Basis der erfindungsgemässen Zusammensetzung realisierbar. Hierbei werden zusätzlich die beim Epoxid-Festharz **A** entstehenden Hydroxylgruppen mit Polyisocyanat, beziehungsweise einem Polyisocyanat-Prepolymer, umgesetzt. Dadurch wird die Viskosität erhöht, und eine Warmapplikation erforderlich.

### Beispiele

Im Folgenden sollen einige Beispiele aufgezeigt werden, welche die Erfindung weiter veranschaulichen, den Umfang der Erfindung aber in keiner Weise beschränken sollen. Die in den Beispielen verwendeten Rohstoffe sind in Tabelle 1 aufgelistet.

**Tabelle1. Eingesetzte Rohstoffe.**

| **Verwendete Rohstoffe** | **Lieferant** |
|---|---|
| Bisphenol-A-diglycidylether (=DGEBA) | Huntsman |
| Araldite GT 7071 (Festharz) (EP-Equivalentsgewicht ca. 515 g/EP-Equivalent) | Huntsman |
| Dicyandiamid (=Dicy) | Degussa |
| Isophoron-diisocyanat (=IPDI) | Degussa-Hüls |
| Caprolactam | EMS Chemie |
| N-Butylamin | BASF |
| 4,4'-Diphenyl-methylen-diisocyanat (=MDI) | Bayer |
| Hexandioldiglycidylether | Prümmer |
| Alcupol® D-2021 (Difunktionelles Polypropylenglykol) (OH-Equivalentgewicht = 1000 g/OH-Equivalent) | Repsol |
| Desmophen 3060 BS (Trifunktionelles Polypropylenglykol) (OH-Equivalentgewicht = 1000 g/OH-Equivalent) | Bayer |
| PolyTHF 1800 (Difunktionelles Polybutylenglykol) (OH-Equivalentgewicht = 900 g/OH-Equivalent) | BASF |
| PolyTHF 2000 (Difunktionelles Polybutylenglykol) (OH-Equivalentgewicht = 1000 g/OH-Equivalent) | BASF |
| Poly bd® R45 HTLO ((Hydroxylterminertes Polybutadien) (OH-Equivalentgewicht = ca. 1200 g/OH-Equivalent) | Arkema |
| 4,4'-[bis-(hydroxyphenyl)-1,3-Phenylene-bis-(1-Methylethyliden)] (=Bisphenol-M) | Mitsui Chemicals |

### Beispielhafte Herstellung eines monohydroxylhaltigien Epoxides "MHE"

Trimethylolpropanglycidylether wurde gemäss dem Verfahren in Patent US 5,668,227, Beispiel 1 aus Trimethylolpropan und Epichlorhydrin mit Tetramethylammoniumchlorid und Natronlauge hergestellt. Man erhält ein gelbliches Produkt mit Epoxidzahl von 7.5 eq/kg und einem Hydroxylgruppengehalt von 1.8 eq/kg. Aus dem HPLC-MS Spektrum kann geschlossen werden, dass im Wesentlichen ein Gemisch von Trimethylolpropandiglycidylether und Trimethylolpropantriglycidylether vorliegt.

### Herstellung von Polymers B: Beispiel B-01)

80 g PolyTHF-1800 (OH-Zahl 62.3 mg/g KOH), 55 g Poly-bd® R-45HTLO (OH-Zahl 46.6 mg/g KOH) und 65 g Alcupol D2021 (OH-Zahl 56.0 mg/g KOH) wurden 30 Minuten unter Vakuum bei 100°C getrocknet. Anschliessend wurden 46.2 g IPDI und 0.04 g Dibutylzinndilaurat zugegeben. Die Reaktion wurde unter Vakuum bei 90°C bis zur Konstanz des NCO-Gehaltes bei 3.44% nach 2.5 h geführt (theoretischer NCO-Gehalt: 3.6%). Anschliessend wurden 117.6 g des oben beschriebenen Trimethylolpropanglycidylethers als monohydroxylhaltiges Epoxid der Formel (IV) zugegeben. Es wurde bei 90°C unter Vakuum weitergerührt, bis der NCO-Gehalt nach weiteren 3h unter 0.1% gesunken war. So wurde ein klares Produkt mit einem Epoxid-Gehalt ("End-EP-Gehalt") von 2.47 eq/kg erhalten

### Herstellung von Polymers B: Beispiel B-02)

200 g PolyTHF 2000 (OH-Zahl 57.5 mg/g KOH) wurden 30 Minuten unter Vakuum bei 100°C getrocknet. Anschliessend wurden 47.5 g IPDI und 0.04 g Dibutylzinndilaurat zugegeben. Die Reaktion wurde unter Vakuum bei 90°C bis zur Konstanz des NCO-Gehaltes bei 3.58% nach 2.5 h geführt (theoretischer NCO-Gehalt: 3.70%). Anschliessend wurden 118.0 g des oben beschriebenen Trimethylolpropanglycidylethers als monohydroxylhaltiges Epoxid der Formel (IV) zugegeben. Es wurde bei 90°C unter Vakuum weitergerührt, bis der NCO-Gehalt nach weiteren 3h unter 0.1 % gesunken war. So wurde ein klares Produkt mit einem Epoxid-Gehalt ("End-EP-Gehalt") von 2.50 eq/kg erhalten.

### Herstellung von Polymers B: Beispiel B-03)

200 g PolyTHF 2000 (OH-Zahl 57.5 mg/g KOH) wurden 30 Minuten unter Vakuum bei 100°C getrocknet. Anschliessend wurden 47.5 g IPDI und 0.04 g Dibutylzinndilaurat zugegeben. Nach 2.5 h Reaktion bei 90°C unter Vakuum wurden 17.7 g Bisphenol-M zugegeben. Die Reaktion wurde weitere 2.0 h unter Vakuum bei 90°C bis zur Konstanz des NCO-Gehaltes bei 1.99% geführt (theoretischer NCO-Gehalt: 2.03%). Anschliessend wurden 72.6 g des oben beschriebenen Trimethylolpropanglycidylethers als monohydroxylhaltiges Epoxid der Formel (IV) zugegeben. Es wurde bei 90°C unter Vakuum weitergerührt, bis der NCO-Gehalt nach weiteren 3h unter 0.1 % gesunken war. So wurde ein klares Produkt mit einem Epoxid-Gehalt ("End-EP-Gehalt") von 1.60 eq/kg erhalten.

### Thixotropiermittel C

Als Beispiel für ein Thixotropiermittel **C** auf Basis eines Harnstoffderivates in einem nicht-diffundierenden Trägermaterial wurde ein Thixotropiermittel **C** gemäss Patentanmeldung EP 1 152 019 A1 in einem blockierten Polyurethan-Prepolymer mit oben erwähnten Rohstoffen hergestellt:

### Trägermaterial: Blockiertes Polyurethanprepolymer "BlockPUP"

600.0 g eines Polyetherpolyols (Desmophen 3060BS; 3000 Dalton; OH-Zahl 57 mg/g KOH) wurden unter Vakuum und Rühren bei 90°C mit 140.0 g IPDI und 0.10 g Dibutylzinndilaurat zum Isocyanat-terminierten Prepolymer umgesetzt. Die Reaktion wurde bis zur Konstanz des NCO-Gehaltes bei 3.41% nach 2.5 h geführt (theoretischer NCO-Gehalt: 3.60%). Anschliessend wurden die freien Isocyanatgruppen bei 90°C unter Vakuum mit 69.2g Caprolactam (2% Überschuss) blockiert, wobei ein NCO-Gehalt von < 0.1% nach 3h erreicht wurde.

### Harnstoffderivat ("HSD") in blockiertem Polyurethan-Prepolymer:

Unter Stickstoff und leichtem Wärmen wurden 68.7 g MDI-Flocken in 181.3 g des oben beschriebenen blockierten Prepolymeres *"BlockPUP"* eingeschmolzen. Danach wurden während zwei Stunden unter Stickstoff und schnellem Rühren 40.1 g N-Butylamin gelöst in 219.9 g des oben beschriebenen blockierten Prepolymers *"BlockPUP"* zugetropft. Nach Beendigung der Zugabe der Aminlösung wurde die weisse Paste für weitere 30 Minuten weitergerührt. So wurde nach dem Abkühlen eine weisse, weiche Paste erhalten, welche einen freien Isocyanatgehalt von < 0.1 % aufwies (Anteil Harnstoffderivat ca. 21%).

### Herstellung der Zusammensetzungen

Es wurden gemäss Tabelle 2 die Referenzzusammensetzungen ***Ref.1*** - ***Ref. 5*** sowie die erfindungsgemässe Zusammensetzungen ***Z-01, Z-02*** und ***Z-03*** hergestellt. Da ein Teil der endständigen Isocyanate in ***B-03*** mit Bisphenol-M blockiert und nicht mit monohydroxylhaltigem Epoxid abreagiert wurden, führte dies zu einem niedrigeren End-EP-Gehalt als in den Polymeren ***B-01*** und ***B-02.*** Deshalb wurde in der das Polymer ***B-03*** enthaltenden Formulierung die im Vergleich zu ***B-01*** und ***B-02*** "fehlende" Menge an monohydroxylhaltigen Epoxid der Formel (IV), wie es vorgängig als *MHE* beschrieben wurde, zusätzlich zugegeben. Aus demselben Grund wurde den Referenzzusammensetzungen ***Ref.2*** und ***Ref. 3***, welche anstelle von Polymer ***B*** ein blockiertes Prepolymer *"BlockPUP"* enthalten, ebenfalls das beschriebene *MHE* zugesetzt.

### Prüfmethoden:

### Zugscherfestigkeit (ZSF) (DIN EN 1465)

Die Probekörper wurden aus den beschriebenen Beispiel-Zusammensetzungen und mit elektrolytisch verzinktem Stahl (eloZn) mit dem Mass 100 x 25 x 0.8mm hergestellt, dabei betrug die Klebfläche 25 x 10mm bei einer Schichtdicke von 0.3mm. Gehärtet wurde 30 Min. bei 180°C. Die Zuggeschwindigkeit betrug 10mm/Min.

### Schlagschälarbeit (ISO 11343)

Die Probekörper wurden aus den beschriebenen Beispiel-Zusammensetzungen und mit elektrolytisch verzinktem Stahl (eloZn) mit dem Mass 90 x 20 x 0.8mm hergestellt, dabei betrug die Klebfläche 20 x 30mm bei einer Schichtdicke von 0.3mm. Gehärtet wurde 30 Min. bei 180°C. Die Zuggeschwindigkeit betrug 2 m/s. Als Bruchenergie in Joule wird die Fläche unter der Messkurve (von 25% bis 90%, gemäss DIN 11343) angegeben.

**Tabelle 2. Zusammensetzungen und Eigenschaften.**

| | ***Ref.1*** | ***Ref.2*** | ***Ref.3*** | ***Ref.4*** | ***Ref.5*** | ***Z1*** | ***Z2*** | ***Z3*** |
|---|---|---|---|---|---|---|---|---|
| Araldite GT 7071 (**A**)[g] | 20.0 | 20.0 | | | 20.0 | 20.0 | 20.0 | 20.0 |
| ***B-01*** (**B**)[g] | | | | 30.0 | 30.0 | 30.0 | | |
| ***B-02*** (**B**)[g] | | | | | | | 30.0 | |
| ***B-03*** (**B**)[g] | | | | | | | | 30.0 |
| *HSD* [g] | | 4.3 | 4.3 | 4.3 | | 4.3 | 4.3 | 4.3 |
| *BlockPUP* [g] | 15.7 | 35.7 | 35.7 | 15.7 | 15.7 | 15.7 | 15.7 | 15.7 |
| Dicyanamid (**D**) [g] | 3.9 | 5.1 | 5.1 | 5.1 | 5.1 | 5.1 | 5.1 | 5.1 |
| DGEBA (**E**) [g] | 36.0 | 36.0 | 43.0 | 43.0 | 36.0 | 36.0 | 36.0 | 36.0 |
| Füllstoffgemisch (**F**) [g] | 13.0 | 13.0 | 13.0 | 13.0 | 13.0 | 13.0 | 13.0 | 13.0 |
| Hexandioldiglycidylether (**G**)[g] | 3.0 | 3.0 | 3.0 | 3.0 | 3.0 | 3.0 | 3.0 | 3.0 |
| Trimethylolpropanglycidylether *MHE* [g] | | 10.0 | 10.0 | | | | | 3.5 |
| ZSF [MPa] | 24.3 | 23.6 | 20.1 | 20.1 | 24.0 | 23.6 | 24.1 | 22.6 |
| BE¹ bei 50°C [J] | 15.1 | 13.5 | 10.0 | 9.6 | 10.3 | 15.0 | 15.2 | 14.8 |
| BE¹ bei 23°C [J] | 13.4 | 12.2 | 9.4 | 9.6 | 10.6 | 14.3 | 15.9 | 15.2 |
| BE¹ bei -20°C [J] | 3.7 | 2.7 | 6.3 | 9.2 | 3.3 | 13.1 | 12.4 | 13.8 |
| BE¹ bei -40°C [J] | 0.8 | 1.6 | 0.6 | 8.7 | 1.7 | 7.3 | 11.2 | 13.0 |

| | | | | | | | | |
|---|---|---|---|---|---|---|---|---|
| ¹BE=Bruchenergie | | | | | | | | |

Die Ergebnisse aus Tabelle 2 zeigen die vorteilhaften Eigenschaften der erfindungsgemässen Zusammensetzungen im Vergleich zu den Referenzbeispielen.

## Patentansprüche

1. Zusammensetzung umfassend
- mindestens ein Epoxid-Festharz **A;**
- mindestens ein Polymer **B** der Formel (I) 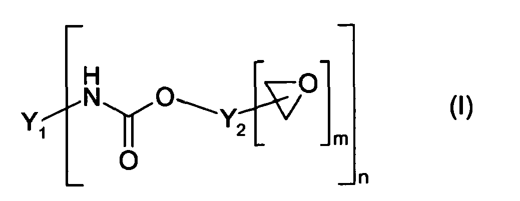 wobei
Y₁ für einen n-wertigen Rest eines mit Isocyanatgruppen terminierten linearen oder verzweigten Polyurethanprepolymeren **PU1** nach dem Entfernen der endständigen Isocyanatgruppen steht;
Y₂ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
m = 1, 2 oder 3 ist;
n = 2 bis 8 ist;
- mindestens ein Thixotropiermittel **C** auf Basis eines Harnstoffderivates;
- mindestens einen Härter **D** für Epoxidharze, welcher durch erhöhte Temperatur aktiviert wird.

2. Zusammensetzung gemäss Anspruch 1, **dadurch gekennzeichnet, dass** das Epoxid-Festharz **A** die Formel (II) aufweist 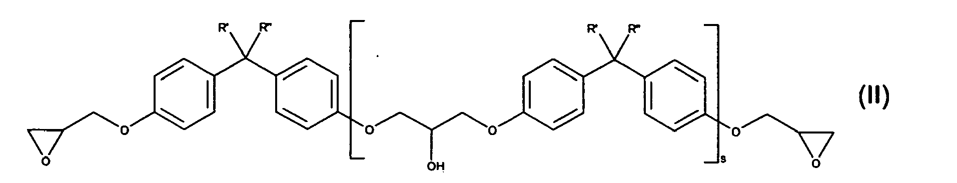 wobei die Substituenten R' und R" unabhängig von einander entweder für H oder CH₃ stehen;
und der Index s für einen Wert von > 1.5 steht.

3. Zusammensetzung gemäss Anspruch 2 oder 3, **dadurch gekennzeichnet**, der Gesamtanteil des Epoxid-Festharzes **A** 1 - 40 Gew.-%, insbesondere 5 - 40 Gew.-%, bevorzugt 5 - 20 Gew.-%, bezogen auf das Gewicht der gesamten Zusammensetzung beträgt.

4. Zusammensetzung gemäss einem der vorhergehenden Ansprüche, **dadurch gekennzeichnet, dass** das Polymer **B** elastisch ist.

5. Zusammensetzung gemäss einem der vorhergehenden Ansprüche, **dadurch gekennzeichnet, dass** das Polymer **B** löslich oder dispergierbar in Epoxid-Flüssigharzen ist.

6. Zusammensetzung gemäss einem der vorhergehenden Ansprüche, **dadurch gekennzeichnet, dass** das Polyurethanprepolymer **PU1,** auf dem Y₁ basiert, hergestellt wird
aus mindestens einem Diisocyanat oder Triisocyanat sowie
aus einem Polymeren **Q_{PM}** mit endständigen Amino-, Thiol- oder Hydroxylgruppen;
und / oder
aus einem, gegebenenfalls substituierten, Polyphenol **Q_{PP}.**

7. Zusammensetzung gemäss Anspruch 6, **dadurch gekennzeichnet, dass** das Polymer **Q_{PM}** 2 oder 3 endständige Amino-, Thiol- oder Hydroxylgruppen aufweist.

8. Zusammensetzung gemäss Anspruch 6, **dadurch gekennzeichnet, dass** das Polyphenol **Q_{PP}** 2 oder 3 phenolische Gruppen aufweist.

9. Zusammensetzung gemäss einem der Ansprüche 6 - 8, **dadurch gekennzeichnet, dass** das Polymer **Q_{PM}** ein α,ω- Polyalkylenglykol mit C₂-C₆-Alkylengruppen oder mit gemischten C₂-C₆- Alkylengruppen ist, welches mit Amino-, Thiol- oder, bevorzugt, Hydroxylgruppen terminiert ist.

10. Zusammensetzung gemäss einem der Ansprüche 6 - 9, , **dadurch gekennzeichnet, dass** das Polymer **Q_{PM}** ein Hydroxyl-Gruppen aufweisendes Polybutadien oder Polyisopren oder ein hydriertes Reaktionsprodukt davon ist.

11. Zusammensetzung gemäss einem der Ansprüche 6 - 10, einem der vorhergehenden Ansprüche, **dadurch gekennzeichnet, dass** das Polymer **Q_{PM}** ein OH-Equivalenzgewicht von 600 - 6'000 g/OH-Equivalent, insbesondere von 700 - 2200 g/OH-Equivalent ist.

12. Zusammensetzung gemäss einem der Ansprüche 6 - 11, **dadurch gekennzeichnet, dass** das für die Herstellung des Polyurethanprepolymers **PU1** ein Diisocyanat, bevorzugt HDI, IPDI, MDI oder TDI, eingesetzt wird.

13. Zusammensetzung gemäss einem der vorhergehenden Ansprüche, **dadurch gekennzeichnet, dass** der Gewichtsanteil aller Polymere **B** der Formel (I) zwischen 5 und 40 Gewichts-%, vorzugsweise zwischen 7 und 35 Gewichts-% bezogen auf das Gewicht der gesamten Zusammensetzung beträgt.

14. Zusammensetzung gemäss einem der vorhergehenden Ansprüche, **dadurch gekennzeichnet, dass** das Thixotropiermittel **C** auf Basis eines Harnstoffderivates in einem Trägermittel vorhanden ist.

15. Zusammensetzung gemäss Anspruch 14, **dadurch gekennzeichnet, dass** das Trägermaterial des Thixotropiermittels **C** ein nicht-diffundierendes Trägermittel, insbesondere ein blockiertes Polyurethanprepolymer, ist.

16. Zusammensetzung gemäss Anspruch 14, **dadurch gekennzeichnet, dass** das Trägermaterial des Thixotropiermittels **C** ein Weichmacher, insbesondere eine Phthalat oder ein Adipat ist.

17. Zusammensetzung gemäss Anspruch 14 oder 15 oder 16, **dadurch gekennzeichnet, dass** das Verhältnis vom Gewicht des Harnstoffderivates zu Gewicht des Trägermittels 2 / 98 bis 50 / 50, insbesondere 5 /95 - 25/75 beträgt.

18. Zusammensetzung gemäss einem der vorhergehenden Ansprüche, **dadurch gekennzeichnet, dass** das Harnstoffderivat im Thixotropiermittel **C** das Produkt der Umsetzung eines aromatischen monomeren Diisocyanaten, insbesondere 4,4'-Diphenyl-methylen-diisocyanat, mit einer aliphatischen Aminverbindung, insbesondere Butylamin ist.

19. Zusammensetzung gemäss einem der vorhergehenden Ansprüche, **dadurch gekennzeichnet, dass** der Gesamtanteil des Thixotropiermittels **C** 5 - 40 Gewichts-%, vorzugsweise 10 - 25 % Gewichts-%, bezogen auf das Gewicht der gesamten Zusammensetzung, beträgt.

20. Zusammensetzung gemäss einem der vorhergehenden Ansprüche, **dadurch gekennzeichnet, dass** der Härter **D** ein latenter Härter ist ausgewählt aus der Gruppe umfassend Dicyandiamid, Guanamine, Guanidine und Aminoguanidine.

21. Zusammensetzung gemäss einem der vorhergehenden Ansprüche, **dadurch gekennzeichnet, dass** der Gesamtanteil des Härters **D** 1 - 10 Gewichts-%, vorzugsweise 2 - 8 Gewichts-%, bezogen auf das Gewicht der gesamten Zusammensetzung, beträgt.

22. Zusammensetzung gemäss einem der vorhergehenden Ansprüche, **dadurch gekennzeichnet, dass** die Zusammensetzung zusätzlich mindestens ein Epoxid-Flüssigharz **E** enthält.

23. Zusammensetzung gemäss Anspruch 22, **dadurch gekennzeichnet, dass** das Epoxid-Flüssigharz E die Formel (III) aufweist 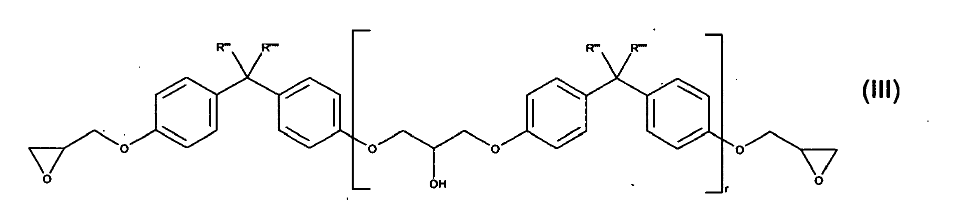 wobei die Substituenten R'" und R"" unabhängig von einander entweder für H oder CH₃ stehen;
und der Index r für einen Wert von 0-1, insbesondere von < 0.2, steht.

24. Zusammensetzung gemäss Anspruch 22 oder 23, **dadurch gekennzeichnet, dass** der Gesamtanteil des Epoxid-Flüssigharz E 10 - 70 Gew.%, insbesondere 15 - 60 Gew.-%, bezogen auf das Gewicht der gesamten Zusammensetzung beträgt.

25. Zusammensetzung gemäss einem der vorhergehenden Ansprüche, **dadurch gekennzeichnet, dass** zusätzlich mindestens ein Füllstoff **F** vorhanden ist, insbesondere in einem Anteil von 5 - 30 Gewichts-%, vorzugsweise 10 - 25 Gewichts-%, bezogen auf das Gewicht der gesamten Zusammensetzung.

26. Zusammensetzung gemäss einem der vorhergehenden Ansprüche, **dadurch gekennzeichnet, dass** zusätzlich mindestens ein epoxidgruppentragender Reaktivverdünner **G** vorhanden ist.

27. Zusammensetzung gemäss einem der vorhergehenden Ansprüche, **dadurch gekennzeichnet, dass** die Zusammensetzung nach Aushärtung eine Bruchenergie gemessen nach DIN 11343 von mehr als 10 J bei 23°C und bevorzugt mehr als 5 J bei -40°C, aufweist.

28. Zusammensetzung gemäss Anspruch 27, **dadurch gekennzeichnet, dass** das Verhältnis der Bruchenergie bei -40°C zur Bruchenergie bei 23°C ≥ 0.40, insbesondere ≥ 0.50, ist.

29. Verwendung einer Zusammensetzung gemäss einem der Ansprüche 1 - 28 als einkomponentiger Klebstoff.

30. Verwendung gemäss Anspruch 29, **dadurch gekennzeichnet, dass** der Klebstoff für das Verkleben von hitzestabilen Materialien, insbesondere von Metallen, verwendet wird.

31. Verwendung gemäss Anspruch 29 oder 30, **dadurch gekennzeichnet, dass** der Klebstoff als Rohbauklebstoff im Automobilbau verwendet wird.

32. Verfahren zum Verkleben von hitzestabilen Materialien, insbesondere von Metallen, **dadurch gekennzeichnet, dass** diese Materialien mit einer Zusammensetzung gemäss einem der Ansprüche 1 - 28 kontaktiert werden und einen Schritt des Aushärtens bei einer Temperatur von 100 - 220 °C, vorzugsweise 120 - 200°C umfasst.

33. Verfahren zum Verkleben gemäss Anspruch 32, **dadurch gekennzeichnet, dass** die Materialien mit einer Zusammensetzung gemäss einem der Ansprüche 1 - 27 kontaktiert werden und dass die verklebten Materialien bei Temperaturen zwischen 100°C und -40°C, vorzugsweise zwischen 80°C und -40°C, insbesondere zwischen 50°C und -40°C eingesetzt werden.

## Claims

1. A composition comprising
- at least one solid epoxy resin **A;**
- at least one polymer **B** of the formula (I) 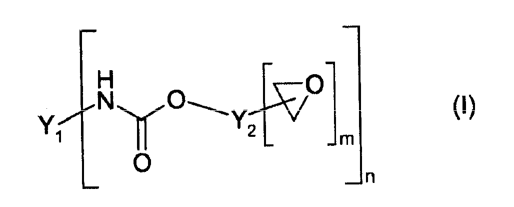 where
Y₁ is an n-valent radical of a linear or branched polyurethane prepolymer **PU1**, terminated with isocyanate groups, following the removal of the terminal isocyanate groups;
Y₂ is a radical of an aliphatic, cycloaliphatic, aromatic or araliphatic epoxide containing a primary or secondary hydroxyl group, following the removal of the hydroxide and epoxide groups;
m is 1, 2 or 3;
n is 2 to 8;
- at least one thixotropic agent **C** based on a urea derivative;
- at least one curative **D** for epoxy resins which is activated by elevated temperature.

2. The composition of claim 1, **characterized in that** the solid epoxy resin **A** has the formula (II) 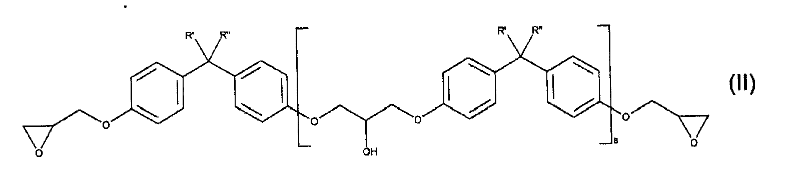 where the substituents R' and R" independently of one another are either H or CH₃; and the index s is a value > 1.5.

3. The composition of claim 2 or 3, **characterized in that** the total fraction of the solid epoxy resin **A** is 1% - 40%, more particularly 5% - 40%, preferably 5% - 20%, by weight, based on the weight of the overall composition.

4. The composition of any one of the preceding claims, **characterized in that** the polymer **B** is elastic.

5. The composition of any one of the preceding claims, **characterized in that** the polymer **B** is soluble or dispersible in liquid epoxy resins.

6. The composition of any one of the preceding claims, **characterized in that** the polyurethane prepolymer **PU1** on which Y₁ is based is prepared
from at least one diisocyanate or triisocyanate and also
from a polymer **Q_{PM}** having terminal amino, thiol or hydroxyl groups; and/or
from an optionally substituted polyphenol **Q_{PP}.**

7. The composition of claim 6, **characterized in that** the polymer **Q_{PM}** has 2 or 3 terminal amino, thiol or hydroxyl groups.

8. The composition of claim 6, **characterized in that** the polyphenol **Q_{PP}** has 2 or 3 phenolic groups.

9. The composition of any one of claims 6 - 8,
**characterized in that** the polymer **Q_{PM}** is an α,ω-polyalkylene glycol having C₂-C₆ alkylene groups or having mixed C₂-C₆ alkylene groups which is terminated with amino groups, thiol groups or, preferably, hydroxyl groups.

10. The composition of any one of claims 6 - 9, **characterized in that** the polymer **Q_{PM}** is a hydroxyl-containing polybutadiene or polyisoprene or a hydrogenated reaction product thereof.

11. The composition of any one of claims 6 - 10, any one of the preceding claims, **characterized in that** the polymer **Q_{PM}** has an OH equivalent weight of 600 - 6000 g/OH equivalent, more particularly of 700 - 2200 g/OH equivalent.

12. The composition of any one of claims 6 - 11, **characterized in that** the polyurethane prepolymer **PU1** is prepared using a diisocyanate, preferably HDI, IPD1, MD1 or TDI.

13. The composition of any one of the preceding claims, **characterized in that** the weight fraction of all the polymers **B** of the formula (I) is between 5% and 40%, preferably between 7% and 35%, by weight, based on the weight of the overall composition.

14. The composition of any one of the preceding claims, **characterized in that** the thixotropic agent **C** based on a urea derivative is present in a carrier agent.

15. The composition of claim 14, **characterized in that** the carrier material of the thixotropic agent **C** is a nondiffusing carrier agent, more particularly a blocked polyurethane prepolymer.

16. The composition of claim 14, **characterized in that** the carrier material of the thixotropic agent **C** is a plasticizer, more particularly a phthalate or an adipate.

17. The composition of claim 14 or 15 or 16, **characterized in that** the ratio of the weight of the urea derivative to the weight of the carrier agent is 2/98 to 50/50, more particularly 5/95 - 25/75.

18. The composition of any one of the preceding claims, **characterized in that** the urea derivative in the thixotropic agent **C** is the product of the reaction of an aromatic monomeric diisocyanate, more particularly 4,4'-diphenylmethylene diisocyanate, with an aliphatic amine compound, more particularly butylamine.

19. The composition of any one of the preceding claims, **characterized in that** the total fraction of the thixotropic agent **C** is 5% - 40%, preferably 10% - 25%, by weight, based on the weight of the overall composition.

20. The composition of any one of the preceding claims, **characterized in that** the curative **D** is a latent curative selected from the group encompassing dicyandiamide, guanamines, guanadines, and amino-guanadines.

21. The composition of any one of the preceding claims, **characterized in that** the total fraction of the curative **D** is 1% - 10%, preferably 2% - 8%, by weight, based on the weight of the overall composition.

22. The composition of any one of the preceding claims, **characterized in that** the composition further comprises at least one liquid epoxy resin **E.**

23. The composition of claim 22, **characterized in that** the liquid epoxy resin **E** has the formula (III) 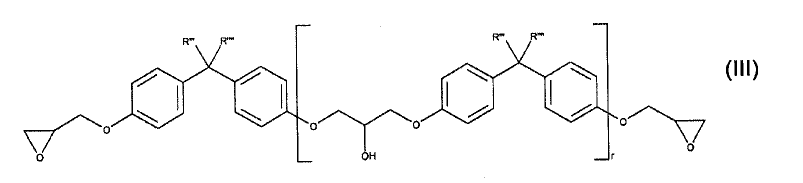 where the substituents R"' and R"" independently of one another are either H or CH₃;
and the index r is a value of 0-1, more particularly of < 0.2.

24. The composition of claim 22 or 23, **characterized in that** the total fraction of the liquid epoxy resin E is 10% - 70%, more particularly 15% - 60%, by weight, based on the weight of the overall composition.

25. The composition of any one of the preceding claims, **characterized in that** additionally at least one filler **F** is present, more particularly in a fraction of 5% - 30%, preferably 10% - 25%, by weight, based on the weight of the overall composition.

26. The composition of any one of the preceding claims, **characterized in that** additionally there is at least one reactive diluent **G** present which carries epoxide groups.

27. The composition of any one of the preceding claims, **characterized in that** the composition after curing has a fracture energy, measured in accordance with DIN 11343, of more than 10 J at 23°C and preferably more than 5 J at -40°C.

28. The composition of claim 27, **characterized in that** the ratio of the fracture energy at -40°C to the fracture energy at 23°C is ≥ 0.40, more particularly ≥ 0.50.

29. The use of a composition of any one of claims 1 - 28 as a one-component adhesive.

30. The use of claim 29, **characterized in that** the adhesive is used for the bonding of heat-stable materials, more particularly of metals.

31. The use of claim 29 or 30, **characterized in that** the adhesive is used as a bodyshell adhesive in automaking.

32. A method of adhesively bonding heat-stable materials, more particularly of metals, **characterized in that** these materials are contacted with a composition of any one of claims 1 - 28, and comprises a step of curing at a temperature of 100 - 220°C, preferably 120 -200°C.

33. The method of adhesive bonding of claim 32, **characterized in that** the materials are contacted with a composition of any one of claims 1 - 27 and **in that** the bonded materials are used at temperatures between 100°C and -40°C, preferably between 80°C and -40°C, more particularly between 50°C and -40°C.

## Revendications

1. Composition comprenant
- au moins une résine solide époxyde **A ;**
- au moins un polymère **B** de formule (I) 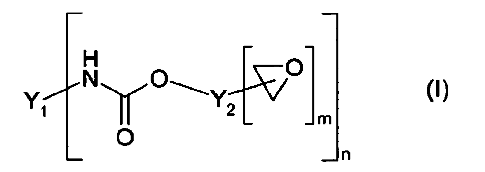 où
Y₁ représente un radical n-valent d'un prépolymère de polyuréthane **PU1** linéaire ou ramifié terminé par des groupes isocyanate après l'élimination des groupes isocyanate en position terminale ;
Y₂ représente un radical d'un époxyde, contenant un groupe hydroxyle primaire ou secondaire, aliphatique, cycloaliphatique, aromatique ou araliphatique après l'élimination des groupes hydroxyde et époxyde ;
m = vaut 1, 2 ou 3 ;
n = vaut 2 à 8 ;
- au moins un agent thixotropique **C** à base d'un dérivé d'urée ;
- au moins un durcisseur **D** pour résines époxydes, qui est activé par une température élevée.

2. Composition selon la revendication 1,
**caractérisée en ce que** la résine solide époxyde **A** présente la formule (II) 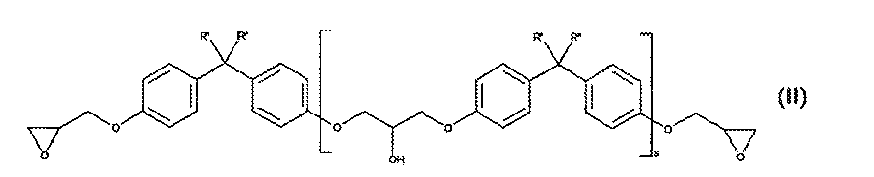 où les substituants R' et R" représentent, indépendamment l'un de l'autre, H ou CH₃ ;
et l'indice s présente une valeur > 1,5.

3. Composition selon la revendication 2 ou 3, **caractérisée en ce que** la proportion totale de la résine solide époxyde **A** est de 1-40% en poids, en particulier de 5-40% en poids, de préférence de 5-20% en poids, par rapport au poids de la composition totale.

4. Composition selon l'une quelconque des revendications précédentes, **caractérisée en ce que** le polymère **B** est élastique.

5. Composition selon l'une quelconque des revendications précédentes, **caractérisée en ce que** le polymère **B** est soluble ou dispersible dans les résines liquides époxyde.

6. Composition selon l'une quelconque des revendications précédentes, **caractérisée en ce que** le prépolymère de polyuréthane **PU1,** sur lequel est basé Y₁, est préparé
- à partir d'au moins un diisocyanate ou un triisocyanate ainsi que
- à partir d'un polymère **Q_{PM}** présentant des groupes amino, thiol ou hydroxyle en position terminale ; et/ou
- à partir d'un polyphénol **Q_{PP},** le cas échéant substitué.

7. Composition selon la revendication 6, **caractérisée en ce que** le polymère **Q_{PM}** présente 2 ou 3 groupes amino, thiol ou hydroxyle en position terminale.

8. Composition selon la revendication 6, **caractérisée en ce que** le polyphénol **Q_{PP}** présente 2 ou 3 groupes phénoliques.

9. Composition selon l'une quelconque des revendications 6 à 8, **caractérisée en ce que** le polymère **Q_{PM}** est un α,ω-polyalkylèneglycol comprenant des groupes C₂-C₆-alkylène ou comprenant des groupes C₂-C₆-alkylène mixtes, qui est terminé par des groupes amino, thiol ou, de préférence, hydroxyle.

10. Composition selon l'une quelconque des revendications 6 à 9, **caractérisée en ce que** le polymère **Q_{PM}** est un polybutadiène ou un polyisoprène présentant des groupes hydroxyle ou un produit de réaction hydrogéné de celui-ci.

11. Composition selon l'une quelconque des revendications 6 à 10, l'une des revendications précédentes, **caractérisée en ce que** le polymère **Q_{PM}** présente un poids équivalent OH de 600-6000 g/équivalent OH, en particulier de 700-2200 g/équivalent OH.

12. Composition selon l'une quelconque des revendications 6 à 11, **caractérisée en ce que** pour la préparation du prépolymère de polyuréthane **PU1,** on utilise un diisocyanate, de préférence HDI, IPDI, MDI ou TDI.

13. Composition selon l'une quelconque des revendications précédentes, **caractérisée en ce que** la proportion pondérale de tous les polymères **B** de formule (I) est comprise entre 5 et 40% en poids, de préférence entre 7 et 35% en poids, par rapport au poids de la composition totale.

14. Composition selon l'une quelconque des revendications précédentes, **caractérisée en ce que** l'agent thixotropique **C** à base d'un dérivé d'urée se trouve dans un support.

15. Composition selon la revendication 14, **caractérisée en ce que** le matériau support de l'agent thixotropique **C** est un matériau support qui ne diffuse pas, en particulier un prépolymère de polyuréthane bloqué.

16. Composition selon la revendication 14, **caractérisée en ce que** le matériau support de l'agent thixotropique **C** est un plastifiant, en particulier un phtalate ou un adipate.

17. Composition selon la revendication 14 ou 15 ou 16, **caractérisée en ce que** le rapport du poids du dérivé d'urée au poids du matériau support est de 2/98 à 50/50, en particulier de 5/95-25/75.

18. Composition selon l'une quelconque des revendications précédentes, **caractérisée en ce que** le dérivé d'urée dans l'agent thixotropique **C** est le produit de la transformation d'un diisocyanate aromatique monomère, en particulier le 4,4'-diphénylméthylènediisocyanate, avec un composé amine aliphatique, en particulier la butylamine.

19. Composition selon l'une quelconque des revendications précédentes, **caractérisée en ce que** la proportion totale de l'agent thixotropique **C** est de 5-40% en poids, de préférence de 10-25% en poids, par rapport au poids de la composition totale.

20. Composition selon l'une quelconque des revendications précédentes, **caractérisée en ce que** le durcisseur **D** est un durcisseur latent, choisi dans le groupe comprenant le dicyanodiamide, les guanamines, les guanidines et les aminoguanidines.

21. Composition selon l'une quelconque des revendications précédentes, **caractérisée en ce que** la proportion totale du durcisseur **D** est de 1-10% en poids, de préférence de 2-8% en poids, par rapport au poids de la composition totale.

22. Composition selon l'une quelconque des revendications précédentes, **caractérisée en ce que** la composition contient en outre au moins une résine liquide époxyde **E.**

23. Composition selon la revendication 22, **caractérisée en ce que** la résine liquide époxyde **E** présente la formule (III) 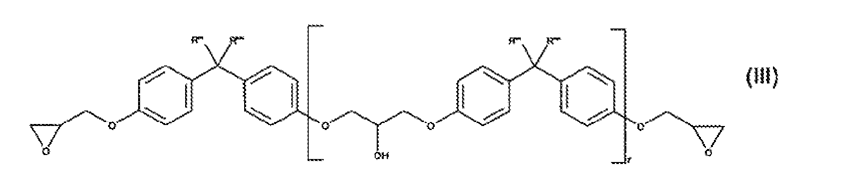 où
- les substituants R''' et R"" représentent, indépendamment l'un de l'autre, H ou CH₃ ; et
- l'indice r présente une valeur de 0-1, en particulier < 0,2.

24. Composition selon la revendication 22 ou 23, **caractérisée en ce que** la proportion totale de la résine liquide époxyde **E** est de 10-70% en poids, en particulier de 15-60% en poids, par rapport au poids de la composition totale.

25. Composition selon l'une quelconque des revendications précédentes, **caractérisée en ce qu'**elle contient en outre au moins une charge **F,** en particulier en une proportion de 5-30% en poids, de préférence de 10-25% en poids, par rapport au poids de la composition totale.

26. Composition selon l'une quelconque des revendications précédentes, **caractérisée en ce qu'**en plus au moins un diluant réactif **G** portant des groupes époxydes est présent.

27. Composition selon l'une quelconque des revendications précédentes, **caractérisée en ce que** la composition, après durcissement, présente une énergie de rupture mesurée selon la norme DIN 11343 supérieure à 10 J à 23°C et de préférence supérieure à 5 J à -40°C.

28. Composition selon la revendication 27, **caractérisée en ce que** le rapport de l'énergie de rupture à -40°C à l'énergie de rupture à 23°C est ≥ 0,40, en particulier ≥ 0,50.

29. Utilisation d'une composition selon l'une quelconque des revendications 1-28 comme adhésif à un composant.

30. Utilisation selon la revendication 29, **caractérisée en ce que** l'adhésif est utilisé pour le collage de matériaux stables à la chaleur, en particulier de métaux.

31. Utilisation selon la revendication 29 ou 30, **caractérisée en ce que** l'adhésif est utilisé comme adhésif brut de montage dans la construction automobile.

32. Procédé pour le collage de matériaux stables à la chaleur, en particulier de métaux, **caractérisé en ce que** ces matériaux sont mis en contact avec une composition selon l'une quelconque des revendications 1-28 et le procédé comprend une étape du durcissement à une température de 100-220°C, de préférence de 120-200°C.

33. Procédé pour le collage selon la revendication 32, **caractérisé en ce que** les matériaux sont mis en contact avec une composition selon l'une quelconque des revendications 1-27 et **en ce que** les matériaux collés sont utilisés à des températures entre 100°C et -40°C, de préférence entre 80°C et -40°C, en particulier entre 50°C et -40°C.
